# EUROPEAN PATENT SPECIFICATION

(11) **EP 2 159 107 B1**
(45) Date of publication and mention of the grant of the patent: **28.03.2012**
(21) Application number: 08460035.2
(22) Date of filing: 21.08.2008
(51) Int. Cl.: B60R 11/02, H04M 1/04

(54) **A mobile phone holder with lateral power supply especially for a mechanical vehicle**
Mobiltelefonhalter mit seitlichem Stromanschluss, speziell für ein mechanisches Fahrzeug
Support de téléphone mobile doté d'une alimentation latérale, en particulier pour un véhicule mécanique

(43) Date of publication of application: 03.03.2010
(73) Proprietor: BURY Sp. z o.o., 39-300 Mielec (PL)
(72) Inventor: Bury, Henryk, 39-300 Mielec (PL)
(74) Representative: Kaminski, Zbigniew

(56) References cited:
- EP-A- 1 835 706
- DE-A1-102007 054 451
- US-A- 5 463 688

## Description

This invention relates to a mobile phone holder with lateral power supply, especially for a mechanical vehicle, that consists of a base, a cover and a slide located slideably within the cover and connected to a power supply contact.

Recently, phones with contacts located on a lateral wall have been more often used. The increasing use of mobile phones with the power supply connection located on a lateral wall can be justified by the need to increase the distance between the power supply connection and the phone antenna, which is usually located on the top wall or the bottom wall of the phone, and thus to eliminate interference of the connection on the quality of the signal received by the antenna. Placing the connection on a lateral wall of the phone has a significant influence on the design of mobile phone holders, since - in order to avoid damaging the connection when the phone is inserted into the holder - the connection cannot have a fixed location but has to be pulled out while the phone is seated in the holder.

The US patent no. US 5 708 707 describes a mobile phone holder wherein the bottom wall of the holder cavity, into which the phone is seated, is mounted slideably in the cover of the connection. When the phone is inserted into the holder the connection moves downwards and interlocks with a fixed contact located in the bottom wall of the cover.

The European patent no. EP 1 055 562 A2 describes a mobile phone holder provided in its lower part with a slide, which slides along the axis of the phone in the guides located in the cover of the phone and which is provided with a contact that moves into the slot in the mobile phone if the slide is manually moved upwards.

In order to protect the contact in the slide from being damaged it is necessary to provide the bottom wall of the phone with a rounded shape and the top wall of the slide with a shape, which is the negative reflection of the wall of the phone. This design also prevents the phone from being inserted into the holder when the slide is moved away and the contact from being damaged.

A mobile phone holder according to the preamble of claim 1 is known from DE 10 2007 054 451 A1.

The object of this invention is to provide an alternative mobile phone holder with a lateral power supply, especially for mechanical vehicles, wherein a contact of the holder is adapted to engage with a lateral connection of the mobile phone without a risk of damaging this contact when the phone is inserted into the holder.

According to the invention there is provided a mobile phone holder having the features of claim 1.

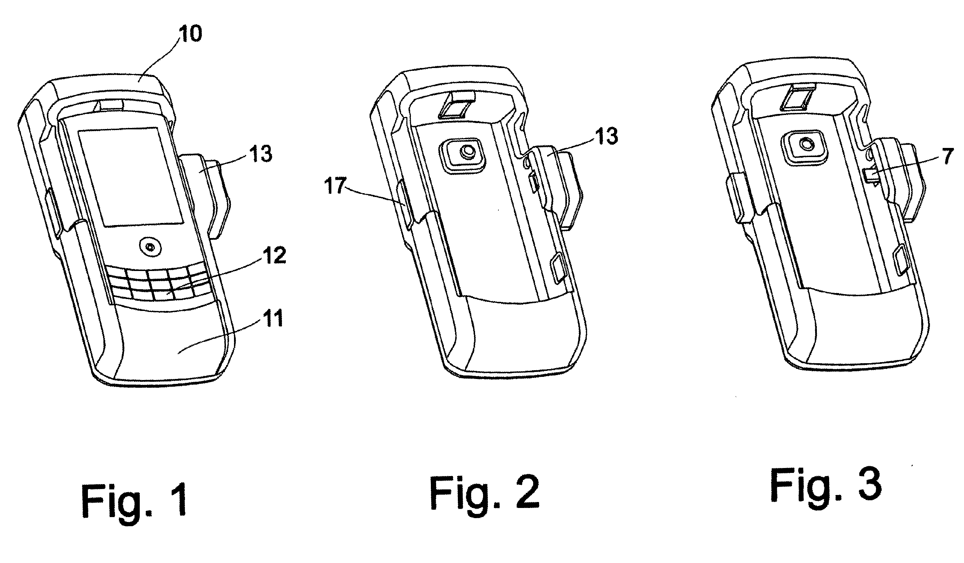

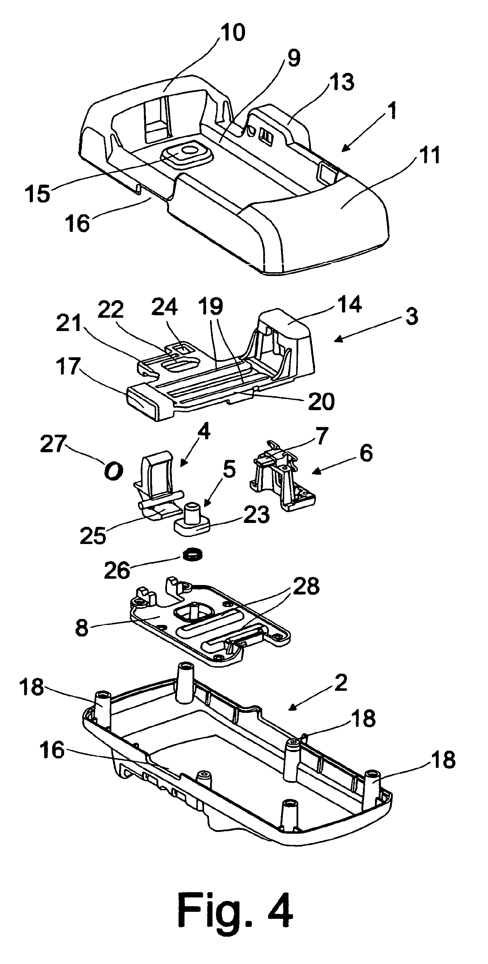

The mobile phone holder with a lateral power supply, especially for mechanical vehicles, according to the invention, is depicted in its embodiments on the drawings, where: Fig. 1 - is a perspective view of the holder with the mobile phone seated in the holder as prior to introduction of the power supply connection; Fig. 2 - is a detailed perspective view of the holder in the same position without a mobile phone; Fig. 3 - is a detailed perspective view of the holder without a mobile phone, with a power supply connection in an "as-pressed" position; Fig. 4 - is an exploded view of the holder according to the invention; Fig. 5 - is a front view of the holder, as prior to introduction of the power supply connection, with the upper part of the cover partly removed; Fig. 6 - is a front view of the holder, with a power supply connection in an "as-pressed" position, and with the upper part of the cover removed.

The mobile phone holder with a lateral power supply connection, especially for mechanical vehicles, according to the invention, as depicted in the drawing, includes the following basic components: a cover 1, within which there are all the elements of the holder, a base 2, which encloses these elements at the bottom, an upper catch 4, a locking button 5, which prevents a slide 3 from being moved, and a casing 8 enclosing the mechanism of the slide at its bottom. The slide 3 is also provided with a power supply connection 6, which has an electronic circuit board, not depicted on the drawing, and a plug 7 protruding from this connection. The cover 1 has a shape of a cubicoid provided with a cavity 9 to accommodate a mobile phone, with an upper protrusion 10 and a lower protrusion 11 to protect the mobile phone 12 seated in the holder cavity 9 from being moved and with a shielding protrusion 13, which shields and guides the button 14 of the slide 3. The cover 1 is also provided in the lower part of the cavity 9 with a flat protrusion 15 with a hole, through which the locking button 5 is adapted to go; the said protrusion 15 is an adapted surface of the cavity 9 to the model of a mobile phone. Moreover, on the side opposite to the protrusion 13, the cover 1 is provided with a notch 16, which is adapted to serve as a guide for a button 17, which protrudes from the other side of the slide 3. A similar notch 16, which is adapted to serve as the other guide of the slide 3, is provided in the base 2. The base 2, which has a shape of a rectangular plate, is provided at its edge with protrusions 18 with holes, through which the screws that mount the base 2 to the cover 1 are driven. The shape of the lower part of the base is adapted to a hanger fixed to a proper element of a mechanical vehicle. The slide 3 has a shape of a rectangular plate 20, provided with guides 19, mounted slideably on transverse protrusions of the lower part of the cover 1 (the protrusions not shown on the drawing). The plate 20 is provided on its one side with a protrusion 21 with a hole 22 that is adapted to engage with a base 23 of the locking button 5, which has a shape of a negative mapping of the protrusion 21. The protrusion 21 of the plate 20 is also provided with an additional blocking protrusion 24, which is adapted to engage with the lower nib 25 of the catch 4.

Both the locking button 5 and the upper catch 4 are provided with springs, 26 and 27 respectively.

The power supply connection 6 is provided within the button 14 of the slide 3 but the plug 7 protrudes outside the button 14. The slide 3, the upper catch 4 and the locking button 5 are mounted within the cover 1 and are enclosed at the bottom with a shield 8. The shield 8 has a shape of a plate, which has projections 28 on the surface facing the slide 3, which slides along these projections.

The entire cover 1 is enclosed at the bottom with the base 2 mounted to it.

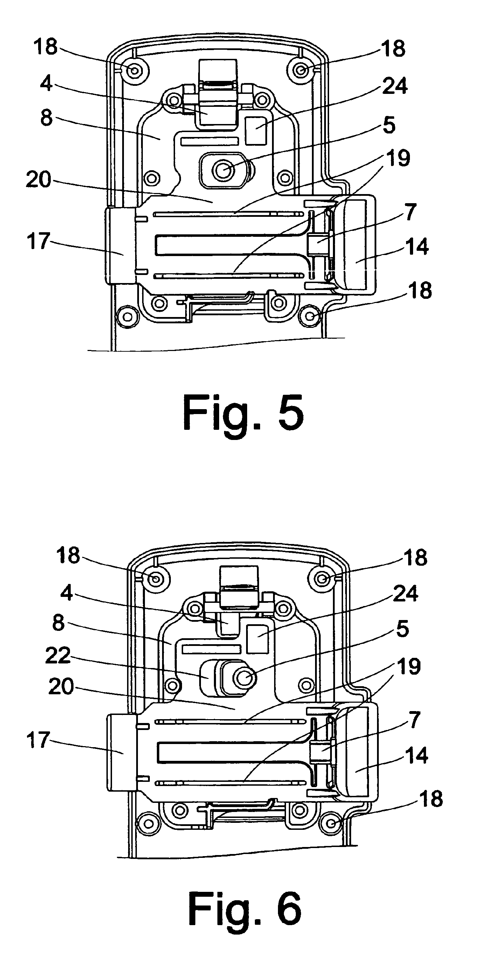

The mobile phone holder with a lateral power supply connection, as described above, operates as follows: in its initial position, prior to the mobile phone is seated in the holder, the slide 3 stays in its rightmost position, whereas the locking button 5 is pulled upwards by the spring 26. The base 23 of the locking button 5 is in the hole 22 of the protrusion 21 of the plate 20 of the slide 3 (Fig. 5). In the position of the locking button 5 as protruding from the lower surface of the cavity 9 the slide 3 is blocked and protected against an accidental move. While the mobile phone 12 is seated into the cavity 9 of the holder, its rear wall presses the locking button 5 and the upper catch 4 concurrently, which results in that the catch 4 moves upwards. When the locking button 5 is pressed, its base 23 overcomes the pressure of the spring 26 and leaves the hole 22 in the plate 20. The slide 3 is unlocked and its transverse move is now possible. At the same time the spring 27 presses the upper catch 4 thus making it move downwards and catch the mobile phone 12 seating in the cavity 9. In order to guide the power supply connection 6 into a proper slot of the mobile phone the button 14 is pressed, which moves the slide 3 leftwards. In the leftmost position of the slide 3 its protrusion 24 goes under the lower nib of the upper catch 4, thus blocking its move and locking the phone in the holder.

Thanks to this arrangement moving the slide 3 results in a concurrent turning the phone on and protecting it from dropping out from the cavity 9.

In an protruding position the plug 7 of the power supply connection 6, according to the invention, has an appropriate length to provide an additional support to hold the phone as-seated in the cavity 9 of the holder.

In order to remove the mobile phone 12 from the holder it is necessary to move the slide 3 first into its rightmost position, i.e. press the button 17, which results in a move of the plug 7 off the power supply slot of the phone and a concurrent unlocking the catch 4 by the protrusion 24 of the plate 20. The mobile phone can be then removed from the cavity 9 without any damage to the plug 7. Once the phone is removed, the button 5 returns into its initial position under the force of the spring 26 and again blocks the slide 3. This position protects the plug 7 from being unintentionally pushed out from the shielding protrusion 13 and damaged by an improper attempt to place the mobile phone 12 into the holder.

### References

- 1: cover
- 2: base
- 3: slide
- 4: upper catch
- 5: locking button
- 6: power supply connection
- 7: plug
- 8: shield for the slide
- 9: cavity
- 10: upper protrusion
- 11: lower protrusion
- 12: mobile phone
- 13: shielding protrusion
- 14: button
- 15: flat protrusion
- 16: notch
- 17: button
- 18: protrusions
- 19: guides
- 20: plate
- 21: protrusion
- 22: hole
- 23: base
- 24: additional blocking protrusion
- 25: lower nib
- 26: spring
- 27: spring
- 28: projections.

## Claims

1. A mobile phone holder with a lateral power supply connection, especially for mechanical vehicles, which consists of a base, a cover and a slide mounted slideably within the cover and connected to a power supply connection, **characterized in that** the slide (3) plate (20), mounted slideably in the cover (1) has a protrusion (21), which is provided with a hole (22) and an additional protrusion (24); the said hole (22) is a negative mapping of a base (23) of a locking button (5) that is mounted slideably within the area of a holder cavity (9); the said additional protrusion (24) is adapted to engage with a nib (25) on an upper catch (4) for the phone, which results in locking the catch when the phone is seated and locked in the holder cavity (9) and the position of the slide corresponds to an "as-pressed" position of the power supply connection (6).

2. The holder according to the Claim 1, wherein the slide (3) has a shape of a flat rectangular plate 20, mounted slideably in the cover (1) and provided, on its one side, with a button (14) connected with the power supply connection (6), as well as, on the other side, with a button (17) to pull the power supply connection (6) out; the said plate is connected with the protrusion (21).

3. The holder according to the Claim 1 or 2, wherein the power supply connection (6) is fixed within the button (14) and the plug (7) protrudes outside the button (14) and has an appropriate length to provide an additional support to hold the phone (12) as-seated in the cavity (9) of the holder.

4. The holder according to the Claims 1 to 3, wherein the plate (20) of the slide (3) is mounted slideably in notches (16) of the cover (1) and the base (2) and is provided with guides (19), which are adapted to engage with projections (28) of a shield (8).

## Patentansprüche

1. Halterung für Mobiltelefon mit einem seitlichen Versorgungsanschluss, insbesondere für Kraftfahrzeuge, bestehend aus einem Grundkörper und einem Deckel sowie einem im Deckel verschiebbar gelagerten Schieber, der mit dem Versorgungsanschluss verbunden ist, **gekennzeichnet dadurch, dass** die Platte (20) des Schiebers (3), gelagert verschiebbar im Deckel (1), über einen damit verbundenen Vorsprung (21) mit Loch (22) und einen Zusatzvorsprung (24) verfügt, wobei das Loch (22) eine Negativwiderspiegelung des Grundkörpers (23) des Verriegelungstasters (5) darstellt, der im Loch der Sitzfläche (9) verschiebbar gelagert ist und der Zusatzvorsprung (24) zusammen mit der Nase (25) des oberen Hakens (4) für Telefon funktioniert und diesen Haken in verriegelter Stellung des im Sitz befestigten Telefons (9) mit dem darin eingedrücktem Versorgungsanschluss (6).betätigt.

2. Halterung nach Anspruch 1, **gekennzeichnet dadurch, dass** der Schieber (3) die Form einer länglichen Platte (20) ausweist, die im Deckel (1) verschiebbar gelagert ist und auf einer Seite mit einem Taster (14) ausgestattet ist, der mit dem Versorgungsanschluss (6) und auf der anderen Seite über Taster (17) zum Herausschieben des Versorgungsanschlusses (6) verfügt, wobei die Platte (20) mit dem Vorsprung (21) verbunden ist.

3. Halterung nach Anspruch 1 oder 2, **gekennzeichnet dadurch, dass** ihr Versorgungsanschluss (6) im Taster (14) fest gelagert ist, wobei der Stecker (7) aus dem Taster (14) herausragt und seine Länge für eine zusätzliche Befestigung des Mobiltelefons (12) im Sitz (9) der Halterung sorgt.

4. Halterung nach Ansprüchen 1 bis 3, **gekennzeichnet dadurch, dass** die Platte (20) des Schiebers (3) in Aussparungen (16) des Deckels (1) und des Grundkörpers (2) verschiebbar gelagert ist und über Schlitzführungen (19) verfügt, welche zu den Distanzvorsprüngen (28) der Abdeckung (8) passen.

## Revendications

1. Le support de téléphone portable à la prise de courant latérale, destiné surtout aux véhicules mécaniques, composé du pied, du couvercle et du tiroir installé de manière décalable à l'intérieur de ce couvercle, relié au connecteur de courant, **caractérisé en ce que** la plaquette (20) du tiroir (3), fixée de manière décalable au couvercle (1), est équipée de détrompeur (21) muni d'orifice (22) et de détrompeur supplémentaire (24), et en plus l'orifice (22) constitue une copie négative du pied (23) de bouton de blocage (5) fixé de manière décalable à l'orifice de surface du siège (9), d'autre part le détrompeur supplémentaire (24) coopère avec la pointe (25) de la griffe supérieure (4) en le bloquant dans la position fixe pour le téléphone à la prise de courant (9) avec le connecteur de courant en dedans (6).

2. Le support, selon la revendication n°1, **caractérisé en ce que** son tiroir est en forme d'une plaquette plate et allongée (20), installée de manière décalable au couvercle (1) et munie d'une part de bouton (14), couplé au connecteur de courant (6), et d'autre part de bouton à retirer ce connecteur de courant (6), et en plus la plaquette (20) est assemblée au détrompeur (21).

3. Le support, selon la revendication n°1 ou n°2, **caractérisé en ce que** son connecteur de courant est installé de manière fixe dans le bouton (14), le connecteur mâle (7) saille à l'intérieur du bouton (14) et sa longueur assure un maintien supplémentaire du téléphone portable (12) au siège (9) du support.

4. Le support, selon la revendication du n°1 au n°3, **caractérisé en ce que** la plaquette (20) du tiroir (3) est installée de manière décalable aux encoches (16) du couvercle (1) et du pied (2) et elle est munie de glissières à fissures (19) coopérant avec les détrompeurs distants (28) du protecteur (8).
